# EUROPEAN PATENT APPLICATION

(11) **EP 3 461 117 A1**
(43) Date of publication of application: **27.03.2019**
(21) Application number: 18156553.2
(22) Date of filing: 13.02.2018
(51) Int. Cl.: H04N 5/225, G08B 13/196

(54) **IMAGE PICKUP APPARATUS**

(30) Priority: 26.09.2017 JP 2017185469
(71) Applicant: CANON KABUSHIKI KAISHA, Ohta-ku Tokyo 146-8501 (JP)
(72) Inventor: KIMURA, Yasunori, Ohta-ku, Tokyo 146-8501 (JP)
(74) Representative: Naidu, Deepal Swamy

(57) **Abstract**

An image pickup apparatus (1) including a lens unit (110), a tilt unit (10) to which the lens unit is fixed, a base unit (30) configured to include an attaching portion, a pan unit (20) including a first tilt unit support portion (207a) configured to support a first side of the tilt unit, and a second tilt unit support portion (207b) configured to support a second side of the tilt unit, in which the pan unit is pan-rotatable with respect to the base unit and supports the tilt unit in a tilt-rotatable manner, and a wireless communication means (214) including a wireless antenna (214b) for wireless communication with an external device. In the image pickup apparatus, the wireless antenna is disposed on the first tilt unit support portion or the second tilt unit support portion.

## Description

### FIELD OF THE INVENTION

The present disclosure relates to an image pickup apparatus, such as a network camera upon which a wireless communication means is mounted.

### BACKGROUND

Camera networks typically comprise a wired connection, such as a LAN cable or the like, between a camera and a recording apparatus. A drawback of such networks is that the wired connection requires physical wiring to the recording apparatus and, thus, requires manual installation work. Accordingly, in recent years, there has been an ever increasing desire for a network camera that can establish a connection with a recording apparatus via wireless communication.

An additional issue is that network cameras may be operated in an outdoor location under a high-temperature environment, and they may also generate and radiate heat from inside the camera. Accordingly, in such cases, exterior members of the camera are required to have high heat dissipation.

Typically, in order to provide high heat dissipation, exterior members of network cameras are formed from metal, such as aluminum.

However, metal can interfere with the propagation of radio waves for wireless communication. Accordingly, it can be difficult to provide high communication quality between a recording apparatus or other network component and a network camera that has exterior members formed of metal.

As a measure for such an issue, there is a digital camera with a metal exterior member that includes a wireless communication means. In the digital camera, an antenna for wireless communication is disposed in the outside on a housing including the metal exterior member, and in which a portion of the antenna is coated with a resin. The resin has a high radio wave transmitting property which enhances the radio wave signals transmitted from the antenna (Japanese Patent Laid-Open No. 2007-060237)

In Japanese Patent Laid-Open No. 2007-060237, it was found that inclining the wireless communication circuit board with respect to a predetermined surface in a digital camera can be effective for improving the camera's wireless communication signals. However, the present inventors have appreciated that the potential benefits of inclining the wireless communications means in this way may be affected by other factors such as the fact that network cameras may operate all day long, and may be installed in high temperature environments and may comprise a number of heat sources (e.g. an image pickup element circuit board, an image processing engine circuit board, a network communication circuit board, an illumination element). Therefore, there is a need to further consider these factors. Furthermore, the present inventors have also appreciated that in order to improve the wireless communications involving a network camera, there is a need to consider the components that shield the wireless communication radio wave signals that are transmitted from, and received by, the wireless antenna of the network camera, and the components that generate electrical noise. For example, the present inventors have appreciated that there is a need to efficiently dissipate the heat generated by the heat sources, and that the camera's wireless antenna needs to be disposed so that the radio waves emitted/received by the wireless antenna are not shielded. In other words, both sufficient heat dissipation property and sufficient communication performance need to be achieved.

### SUMMARY OF THE INVENTION

Accordingly, the present disclosure provides an improved image pickup apparatus that, for example, has a simple configuration and with high performance wireless communication.

From a first aspect, the present disclosure provides an image pickup apparatus as specified in claims 1 to 8.

Further features, advantages and aspects of the present invention will become apparent from the following description of exemplary embodiments with reference to the attached drawings. Each of the embodiments of the present invention described below can be implemented solely or as a combination of a plurality of the embodiments. Also, features from different embodiments can be combined where necessary or where the combination of elements or features from individual embodiments in a single embodiment is beneficial.

### BRIEF DESCRIPTION OF THE DRAWINGS

Fig. 1 provides an external view of a network monitoring camera in an assembled and disassembled state, in accordance with a first exemplary embodiment of the present disclosure.
Fig. 2 provides a more detailed perspective view of the network monitoring camera in a disassembled state, in accordance with the first exemplary embodiment.
Fig. 3 is a cross-sectional view of the network monitoring camera according to the first exemplary embodiment.
Fig. 4 is a schematic view of a wireless communication means.
Fig. 5 is a detailed perspective view of a network monitoring camera according to a second exemplary embodiment in a disassembled state.
Fig. 6 is a cross-sectional view of the network monitoring camera according to the second exemplary embodiment.
Fig. 7 is an enlarged cross-sectional view of the network monitoring camera of Fig. 6.

### DESCRIPTION OF THE EMBODIMENTS

### First Exemplary Embodiment

Hereinafter, an example of an embodiment of the present disclosure will be described with reference to the drawings.

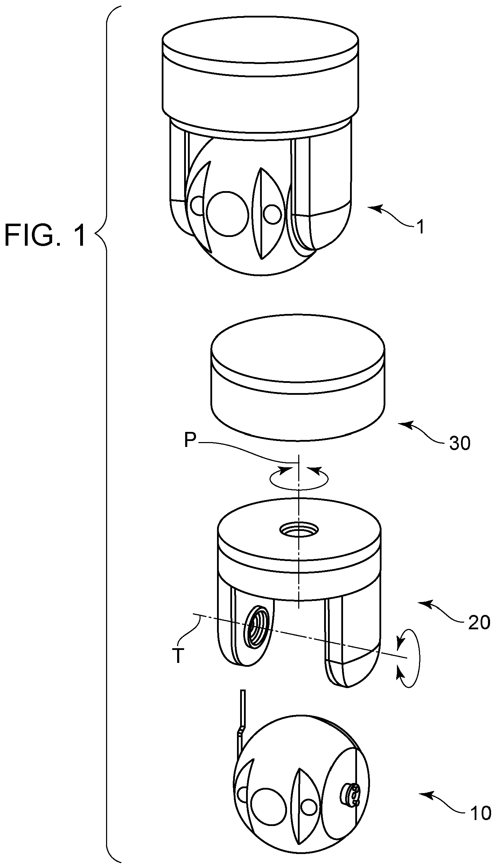

The top drawing of Fig. 1 provides an external view of a network monitoring camera 1 (hereinafter, referred to as a monitoring camera, network camera or camera) according to the exemplary embodiment of the present disclosure and is a perspective view of the unit (i.e. camera) in an assembled state. The drawings below the top drawings of Fig. 1 provide a perspective view of the camera's 1 sub-components (e.g. the tilt unit 10, the pan unit 20, and the base unit 30 of the camera 1) in a disassembled state.

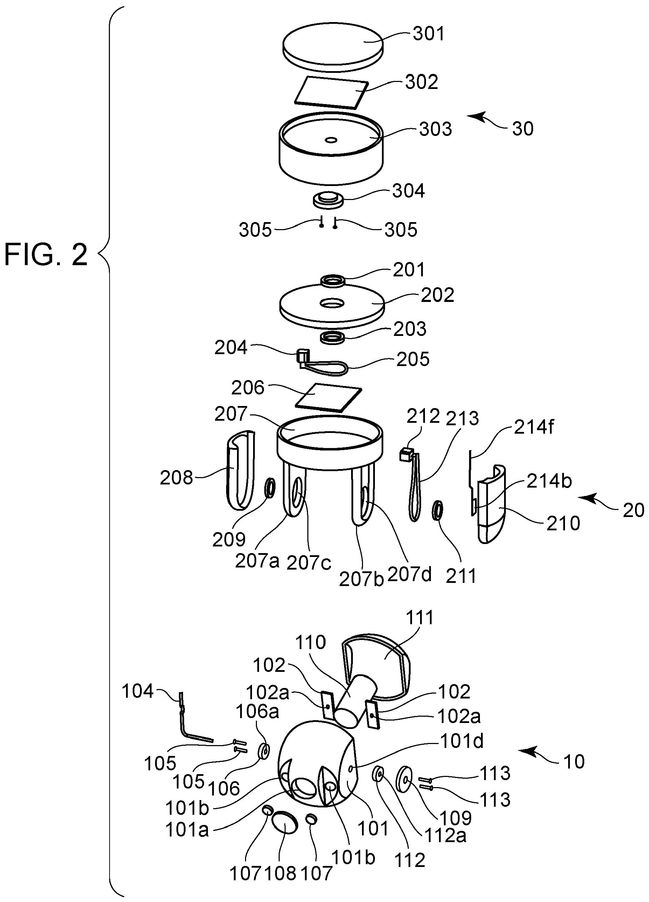

Fig. 2 is a perspective view of the monitoring camera 1 according to a first exemplary embodiment, which illustrates further components of the camera in a disassembled state.

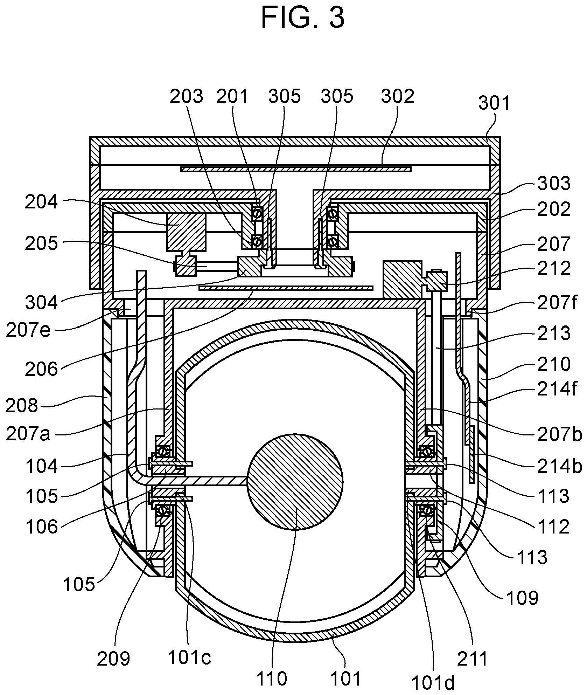

Fig. 3 is a cross-sectional view of the monitoring camera 1 according to the first exemplary embodiment.

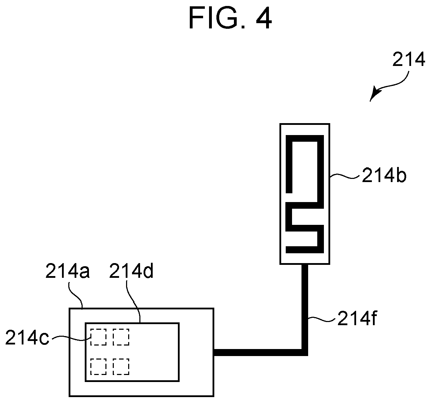

Fig. 4 is a schematic view of a wireless communication means which the camera units of the embodiments herein are preferably arranged to comprise.

Note that in the present exemplary embodiment, there is provided an example of a monitoring camera that is arranged to wirelessly connect, in a communicable manner, to a server (a monitoring device) of an external image monitoring center. The image monitoring center may be an image monitoring system that monitors images on the server side that are captured by, and transmitted to the server from, the network camera. However, it will be appreciated that the present disclosure is not limited to such a monitoring system and the camera may transmit data to any other type of computer or display device.

As illustrated in Fig. 1, the monitoring camera 1 of the present exemplary embodiment includes a tilt unit 10, a pan unit 20, and a base unit 30.

The base unit 30 includes an attachment portion which, when the camera is installed in a building, is fixed to an external clamp face such as a ceiling or a wall. The base unit 30 supports the pan unit 20 in a pan-rotatable manner about a pan-rotation axis P. That is, the pan unit 20 is rotatably mounted to the base unit 30 and may be rotated relative to the base unit about a pan-rotation axis P. In this way, it will be appreciated that the pan unit 20 may be rotated relative to the base unit 30 in a plane (i.e. rotation plane) that extends along a y axis and a x axis. The y axis and x-axis are orthogonal axes. The base unit 30 preferably has a contact surface which faces a rotation surface of the pan unit 20 when the pan unit 20 is rotatably connected to the base unit 30. The contact surface of the base unit 30 may be substantially parallel with the rotation surface of the pan unit 30 when the pan unit 20 is rotatably connected to the base unit 30. The plane in which the pan unit 20 rotates relative to the base unit 30 is preferably parallel, or at least substantially parallel, with the contact surface of the base unit 30 and/or rotation surface of the pan unit 20. The pan-rotation axis P is preferably normal to the contact surface of the base unit 30 and/or rotation surface of the pan unit 20. It will also be appreciated that the pan-rotation axis P is normal to the plane in which the pan unit 20 rotates relative to the base unit 30. Further, the pan-rotation axis P may be normal to the ceiling/wall of a building when the base unit 30 is attached to the ceiling/wall. However, in other examples, the pan-rotation axis P may of course be inclined relative to the ceiling/wall.

The pan unit 20 supports the tilt unit 10 in a tilt-rotatable manner about a tilt rotation axis T. That is, the tilt unit 10 is rotatably mounted to the pan unit 20 and may be rotated relative to the pan unit 20 about a tilt-rotation axis T. The tilt-rotation axis T is preferably orthogonal to the pan-rotation axis P. Therefore, it will be appreciated that the tilt unit 10 may be rotated relative to the pan unit 20 in a plane (i.e. tilt plane) which is orthogonal to the rotation plane (i.e. orthogonal to the plane along which the pan unit 20 rotates relative to the base unit 30).

The tilt unit 10 includes a lens and an image pickup element for imaging an object. Furthermore, the pan unit 20 and the tilt unit 10 are not covered with a cover or the like and is exposed externally. That is, for example, it will be appreciated that the camera unit 1 does not comprise a cover or housing portion that covers the pan unit 20 and the tilt-unit 10 so as to ensure that the pan unit 20 and tilt unit 10 are directly exposed to the outer environment when in use.

The base unit 30 includes a first base housing 301, a first circuit board 302, a second base housing 303, and a panning gear 304.

The first base housing 301 is fixed to a clamp face, such as a ceiling or a wall (not shown), with a fixing means, such as a screw (not shown).

The first circuit board 302 is a printed circuit board serving as an external interface on which an RJ45 connector, an external input/output connector, a power supply connection connector, a sound input/output connector, a connector of an external memory such as an SD card (all not shown) are mounted. The first circuit board 302 is fixed to the first base housing 301 or the second base housing 303 with a fixing means, such as a screw (not shown).

The second base housing 303 is fixed to the first base housing 301 with a fixing means, such as a screw (not shown), so as to surround the first circuit board 302. A first pan bearing 201 and a second pan bearing 203 are fitted and fixed to the second base housing 303 and a first pan housing 202. The first pan housing 202 may be parallel with the rotation plane and/or first base housing 301.

The panning gear 304 is a member provided with teeth on a circular outer periphery thereof and is fixed to the second base housing 303 with screws 305 so as to urge the second pan bearing 203 to rotate about the pan rotation-axis P.

The pan unit 20 includes the first pan housing 202, a pan motor 204, a pan belt 205, a second circuit board 206, and a second pan housing 207 serving as a base portion. The pan unit 20 further includes a first tilt unit support portion cover 208, a second tilt unit support portion cover 210, a first tilt unit support portion 207a, and a second tilt unit support portion 207b. The first tilt unit support portion 207a and/or the second tilt unit support portion 207b preferably extend normally, or at least substantially normally, from the rotation plane. For example, the length of the first unit support portion 207a and/or the length of the second tilt unit support portion 207b may be substantially normal to the rotation plane. In other words, the length of the first unit support portion 207a and/or the length of the second tilt unit support portion 207b may be parallel with the tilt plane.

The first pan housing 202 is preferably supported by the first pan bearing 201 and the second pan bearing 203 in a pan-rotatable manner about the pan-rotation axis P with respect to the second base housing 303.

Teeth are provided on an outer periphery of a rotating portion of the pan motor 204. The pan motor 204 is fixed to the first pan housing 202 with a fixing means (not shown).

Teeth are provided on an inner periphery of the pan belt 205. The pan belt 205 is wrapped around the rotating portion of the pan motor 204 and the panning gear 304.

The teeth of the rotating portion of the pan motor 204 and the teeth of the panning gear 304 are engaged with the teeth of the pan belt 205 so that motive power is transmitted.

Accordingly, it will be appreciated that the rotation of the pan motor 204 rotates the panning gear 304 via rotation of the pan belt 205 so as to rotate the pan unit 20 relative to the base unit 30 about the pan-rotation axis P.

The second circuit board 206 is a printed circuit board on which an image processing engine, a communication processing engine, and a memory (all not shown) are mounted, and is fixed to the second pan housing 207 with a fixing means, such as a screw (not shown).

Furthermore, the second circuit board 206 is electrically connected to the first circuit board 302 with a connection means, such as a transmission cable (not shown).

The second pan housing 207 is fixed to the first pan housing 202 with a fixing means, such as a screw (not shown), so as to surround the panning gear 304, the pan motor 204, the pan belt 205, and the second circuit board 206.

The first tilt unit support portion 207a and the second tilt unit support portion 207b support a first side of the tilt unit 10 and a second side of the tilt unit 10, respectively. A first hole 207c and a second hole 207d are provided in the first tilt unit support portion 207a and the second tilt unit support portion 207b, respectively. The first hole 207c and second hole 207d are positioned on the tilt rotation axis T.

The first tilt unit support portion cover 208 and the second tilt unit support portion cover 210 are, respectively, fixed to an outer side of the first tilt unit support portion 207a and an outer side of the second tilt unit support portion 207b with fixing means, such as a screw (not shown).

Furthermore, a third hole 207e and a fourth hole 207f are provided in the second pan housing 207 at a base of the first tilt unit support portion 207a and a base of the second tilt unit support portion 207b, respectively (e.g. see Fig. 3).

The tilt unit 10 includes a lens unit 110, a first tilt housing 101, illumination means 102, illumination lenses 107, and a second tilt housing 111.

The lens unit 110 includes a lens, a lens holder, a printed circuit board, and an image pickup element (all not shown), and is fixed to the first tilt housing 101 with a fixing means (not shown).

The first tilt housing 101 is substantially spherical, and a first hole 101a that passes the light from an object to enter the lens unit 110 is provided in the first tilt housing 101 on an optical axis.

A lens cover 108 is transparent and is fixed to the first tilt housing 101 with a fixing means, such as an adhesive agent (not shown), so as to be fitted in the first hole 101a.

The pieces of illumination means 102 are printed circuit boards or FPC substrates including illumination elements 102a, such as infrared LEDs, and are fixed to the first tilt housing 101 with fixing means (not shown).

Electric connection to the illumination means 102 from a printed circuit board (not shown) inside the lens unit 110 is established through a connection means, such as a transmission cable.

An object that is to be imaged with the lens unit 110 is irradiated with light emitted from the illumination elements 102a.

Accordingly, in the first tilt housing 101, second holes 101b are provided on the irradiation side of the illumination elements 102a.

Illumination lenses 107 are lenses that project light emitted from the illumination elements 102a, and are fixed to the first tilt housing 101 with a fixing means, such as an adhesive agent (not shown), so as to be fitted to the second holes 101b.

The illumination lenses 107 may focus or defuse the light emitted from the illumination elements 102a in accordance with the angle of view of the lens unit 110 and the distance to the object.

The second tilt housing 111 is fixed to the first tilt housing 101 so as to surround the lens unit 110 and the illumination means 102.

A third hole 101c and a fourth hole 101d are provided in the first tilt housing 101 on the tilt rotation axis T (e.g. see Fig. 3). The first tilt housing 101 is supported by a first tilt bearing 209, a second tilt bearing 211, a first tilt shaft 106, and a second tilt shaft 112 in a tilt-rotatable manner about the tilt rotation axis T with respect to the second pan housing 207.

The first tilt bearing 209 is positioned on the tilt rotation axis T and is fitted to the first tilt unit support portion 207a and the first tilt shaft 106.

The first tilt shaft 106 is substantially tubular and includes a hole 106a. The first tilt shaft 106 is positioned on the tilt rotation axis T and is fixed to a first tilt housing 101 with screws 105.

The tilt gear 109 is circular, and is a member that is provided with teeth on the outer periphery thereof. The second tilt bearing 211 is positioned on the tilt rotation axis T and is fitted to the second tilt unit support portion 207b.

The second tilt shaft 112 is substantially tubular and includes a hole 112a. The second tilt shaft 112 is positioned on the tilt rotation axis T and is fixed to the first tilt housing 101 together with the tilt gear 109 with screws 113.

Teeth are provided on an outer periphery of a rotating portion of a tilt motor 212. The tilt motor 212 is fixed to the second pan housing 207 with a fixing means (not shown).

Teeth are provided on an inner periphery of a tilt belt 213. The tilt belt 213 is wrapped around the rotating portion of the tilt motor 212 and the tilt gear 109.

The teeth of the rotating portion of the tilt motor 212 and the teeth of the tilt gear 109 are engaged with the teeth of the tilt belt 213 so that motive power is transmitted.

Accordingly, the rotation of the rotating portion of the tilt motor 212 rotates the tilt gear 109 via rotation of the tilt belt 213 so as to rotate the tilt unit 10 relative to the pan unit 20 about the tilt-rotation axis T.

A transmission cable 104 is a cable that transmits an electric signal of the image pickup element (not shown) inside the lens unit 110 to the second circuit board 206.

The transmission cable 104 passes through the third hole 101c of the first tilt housing 101, the hole 106a of the first tilt shaft 106, the first hole 207c of the first tilt unit support portion 207a, the first tilt bearing 209, and the third hole 207e of the second pan housing 207. Furthermore, the transmission cable 104 is connected to the second circuit board 206 with a connection means, such as a connector (not shown).

Accordingly, it will be appreciated that at least a portion of transmission cable 104 is parallel with the tilt rotation axis T. Therefore, when the tilt unit 10 is rotated about the tilt rotation axis T, at least a portion of the transmission cable 104 will lie of the axis of rotation. In this way, it can be seen that the tilt unit 10 rotates about a portion of the transmission cable 104 which lies parallel with the tilt rotation axis T. This is beneficial because, by passing the transmission cable 104 on the tilt rotation axis T in the above manner, the torsional amount of the transmission cable 104 during tilting can be suppressed.

A wireless communication means 214 is a unit member that allows wireless communication between the monitoring camera 1 and the external device.

The wireless communication means 214 will be described in detail next.

As illustrated in Fig. 4, the wireless communication means 214 transmits and receives data through wireless communication, such as a wireless LAN, and includes a wireless substrate 214a and a wireless antenna 214b (i.e. an antenna for wireless communication). The wireless antenna 214b is connected to the wireless substrate 214a through the wireless antenna cable 214f.

The wireless substrate 214a is provided with an IC chip 214c, a sheet metal 214d, and the like, and is electrically connected to the second circuit board 206 with a connector or the like (not shown).

In the present embodiment, the wireless antenna 214b is connected to the second tilt unit support portion 207b or the second tilt unit support portion cover 210 with a fixing means, such as a screw.

The second tilt unit support portion cover 210 may have a curved shape or a curved region, and is arranged to contain/house the wireless antenna 214b. Preferably, the wireless antenna 214b is completely contained within the second tilt unit support portion cover 210.

The wireless antenna cable 214f passes through the fourth hole 207f, and the wireless substrate 214a is electrically connected to the second circuit board 206 with a connection means (not shown).

Dissipation of heat of the monitoring camera 1 will be described next.

The heat sources are mainly the lens unit 110, the illumination elements 102a, the first circuit board 302, the second circuit board 206, the pan motor 204, and the tilt motor 212.

Heat radiated from the above members passes through various heat dissipation paths and is ultimately released to the outside of the apparatus body (i.e. to the external environment) through the surfaces (e.g. exterior surfaces) of the camera unit 1. That is, for example, heat generated by the camera unit 1 (e.g. the heat sources of the camera unit 1) is dissipated to the external environment via the external surfaces of the camera unit.

In order to actively release the heat to the outside of the apparatus body (i.e. to the external environment), metal such as aluminum having high thermal conductivity is used in the external members in many cases. For example, the external surface(s) of the camera unit 1, or at least a portion thereof, may be made out of metal to more efficiently dissipate heat to the external environment, and thereby help to cool the camera unit 1.

In the present exemplary embodiment, the external members of the camera unit 1 include the first base housing 301, the second base housing 303, the first pan housing 202, the second pan housing 207, the first tilt housing 101, and the second tilt housing 111. These exterior members are formed of metal.

In addition to the above, the camera unit also includes a heat conducting means, such as a thermal sheet (not shown), that is arranged to transfer heat from the lens unit 110 and the illumination elements 102a to the first tilt housing 101. In this way, the heat conducting means helps to more efficiently transfer internally generated heat to an external member (in this case the first tilt housing 101) and to thereby more efficiently release the generated heat to the external environment through an external surface of the camera unit 1.

Similarly, heat from the second circuit board 206, the pan motor 204, and the tilt motor 212 is transmitted to the first pan housing 202 and the second pan housing 207 through a heat conducting means, such as a thermal sheet (not shown). Subsequently, the heat is released to the outside of the apparatus body through external surfaces of the first pan housing 202 and the second pan housing 207.

Heat from the first circuit board 302 is transmitted to the first base housing 301 and the second base housing 303 through a heat conducing means, such as a thermal sheet (not shown), and, subsequently, is released to the outside of the apparatus body through the external surfaces of the first base housing 301 and the second base housing 303.

The heat radiated from the heat sources are dissipated to the outside of the apparatus body through the exterior members in the above manner.

Incidentally, the wireless antenna 214b has characteristics in that the communication quality thereof is degraded when another piece of metal or an electrical noise source is arranged in the vicinity thereof.

In the monitoring camera 1, the main noise sources are the first circuit board 302, the second circuit board 206, the transmission cable 104, and the lens unit 110.

It is desirable that the wireless antenna 214b is disposed as far away as possible from the noise sources.

Accordingly, in the present embodiment, the transmission cable 104, which is a noise source, is disposed in the vicinity of (preferably disposed on or adjacent to) the first tilt unit support portion 207a and the wireless antenna 214b is disposed in the vicinity of (preferably disposed on or adjacent to) the second tilt unit support portion 207b which, as described above, is separated from and opposes the first tilt unit support portion 207a. That is, in more general terms, it will be seen that the transmission cable 104 and the wireless antenna 214b are arranged on (or adjacent to) different sides (preferably opposing sides) of the tilt unit 10. In this respect, the transmission cable 104 and the wireless antenna 214b are separated by the tilt unit 10 (which in the present example is arranged between the first tilt unit support portion 207a and the second tilt unit support portion 207b). In this way, the transmission cable 104 is prevented from being disposed close to the wireless antenna 214b and from degrading the communication performance. It will also be seen that by disposing the wireless antenna 214b in the vicinity of (preferably disposed on or adjacent to) the first tilt unit support portion 207a, the position of the antenna 214b does not move with the rotation of the tilt unit 10. In this way, the signal from the antenna 214b is not affected by the tilting movement of the tilt unit 10 and, as such, the reliability/performance of the wireless communications can be improved.

Furthermore, by forming the second tilt unit support portion cover 210 (which surrounds (i.e. houses) the wireless antenna 214b) with resin (ABS resin, for example, due to its high radio wave communication performance compared with metal), the performance of radio wave communication can be improved.

With such a configuration, the monitoring camera 1 can achieve high performance wireless communication with the external device.

### Second Exemplary Embodiment

In the first exemplary embodiment, a configuration in which the tilt is driven using a motor, a belt, and a gear has been illustrated; however, in a second exemplary embodiment, a configuration in which the tilt is driven using an ultrasonic motor will be illustrated.

Furthermore, since configurations other than the configuration related to the driving of the tilt are the same, descriptions thereof are omitted and the configuration that is different will be described only.

Since driving of the pan using an ultrasonic motor can be achieved with a configuration that is similar to that of the configuration driving the tilt, description thereof is omitted.

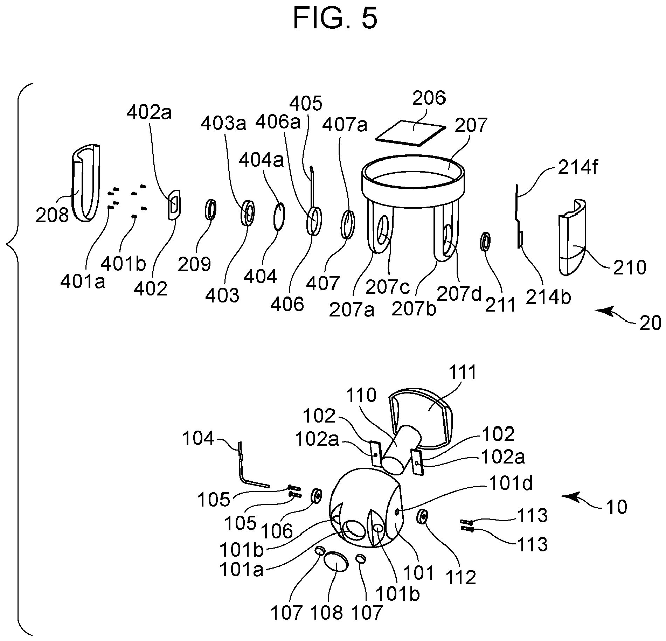

Fig. 5 is a detailed perspective view of a pan unit 20 and a tilt unit of a monitoring camera 1, in a disassembled state, according to a second exemplary embodiment.

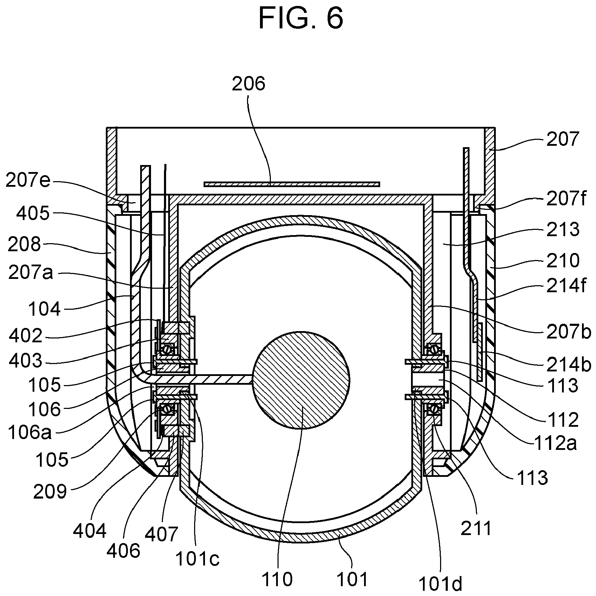

Fig. 6 is a cross-sectional view of the monitoring camera 1, when assembled, in accordance with the second exemplary embodiment.

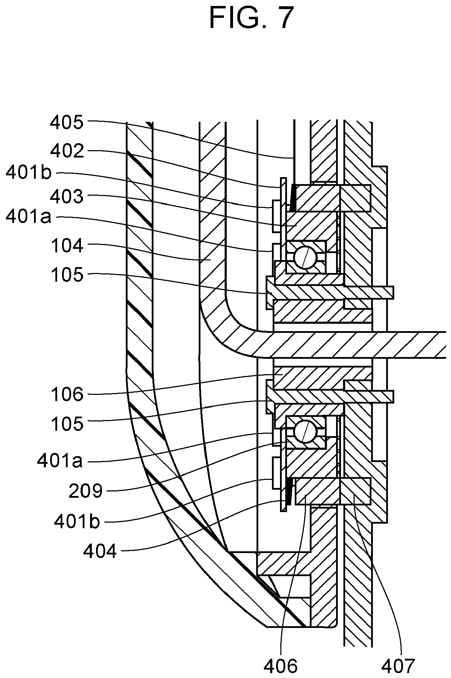

Fig. 7 is an enlarged cross-sectional view of the monitoring camera 1 of Fig. 6.

The ultrasonic motor will be described first.

The ultrasonic motor is a type of motor in which the rotor is driven using an ultrasonic vibration. The ultrasonic motor is ring shaped, and rotationally drives the tilt unit 10.

In a state in which appropriate pressures are applied to the stator and the rotor, a flexural wave motion is generated in the stator, and a progressive wave thereof is used to drive the rotor.

By using a high-performance encoder (e.g. optical encoder) together with an ultrasonic motor, a highly accurate position control can be performed.

In the present exemplary embodiment, an ultrasonic motor unit 40 includes a first screw 401a, a second screw 401b, an ultrasonic motor plate 402, a tilt bearing support member 403, a waved washer 404, a stator FPC substrate 405, a stator 406, and a rotor 407.

Since the ultrasonic motor unit 40 has constituting components that are made of metal and generates noise, there are cases in which the ultrasonic motor unit 40 interferes with the radio wave of the wireless antenna 214b.

Accordingly, the ultrasonic motor unit 40 is disposed on the side that the wireless antenna 214b is not disposed - e.g. the ultrasonic motor unit 40 may be disposed on a first tilt unit support portion 207a side. That is, in more general terms, it will be seen that the ultrasonic motor unit 40 and the wireless antenna 214b are arranged on (or adjacent to) different sides (preferably opposing sides) of the tilt unit 10. In this respect, the ultrasonic motor unit 40 and the wireless antenna 214b are separated by the tilt unit 10 (which in the present example is arranged between the first tilt unit support portion 207a and the second tilt unit support portion 207b). Accordingly, it will also be seen that, in some examples, the ultrasonic motor unit 40 and the transmission cable 104 are arranged on, or located adjacent to, the same side of the tilt unit 10. However, in some examples, the transmission cable 104, the ultrasonic motor unit 40, and the wireless antenna 214b may each be arranged on, or located adjacent to, a different respective side of the tilt unit 10.

In the present embodiment, the rotor 407 is fixed to the side of the first tilt housing 101 that faces the first tilt unit support portion 207a (in other words, the rotor 407 is fixed to the third hole 101c side of the first tilt housing 101) with a fixing means, such as an adhesive (not shown).

The stator 406 is disposed so as to oppose the rotor 407.

The stator FPC substrate 405 is fixed on the outside of the stator 406 with a fixing means, such as an adhesive agent (not shown), passes through the third hole 207e, and is connected to the second circuit board 206.

The first tilt bearing 209 is positioned on the tilt rotation axis T and is fitted to the first tilt shaft 106 and the tilt bearing support member 403.

The ultrasonic motor plate 402 is fitted to the tilt bearing support member 403 with the screw 401a so as to hold the first tilt bearing 209 with the tilt bearing support member 403.

Furthermore, the ultrasonic motor plate 402 is fitted to the first tilt housing 101 with the screw 401b so as to hold the stator 406 and the rotor 407 with the first tilt housing 101.

In use, a pressure may be applied between the stator 406 and the rotor 407 to generate a flexural wave motion. The flexural wave motion generated in the stator 406 may then be transmitted to the rotor 407 so as to rotate the stator 406 and the rotor 407.

Accordingly, the rotor 407 rotating relative to the stator 406 allows the tilt unit 10 to tilt-rotate with respect to the pan unit 20.

In the present embodiment, the transmission cable 104 passes through a hole 407a of the rotor 407, a hole 406a of the stator 406, a hole 403a of the tilt bearing support member 403, a hole 402a of the ultrasonic motor plate 402, the third hole 101c, and the first hole 207c.

In variants of the above examples, the first tilt unit support portion 207a and the second tilt unit support portion 207b may be components different from the second pan housing 207 - i.e. the first tilt unit support portion 207a, the second tilt unit support portion 207b and the second pan housing 207 may be separate components rather than integral components. In some examples, communication quality is further improved by forming the first tilt unit support portion 207a and the second tilt unit support portion 207b from resin (such as an ABS resin). Forming the first and the second tilt unit support portions 207a, 207b out of resin ensures that they do not shield (or at least only partially shield as compared to forming the first and the second tilt unit support portions 207a, 207b from metal) the radio waves from the wireless antenna 214b.

In the above exemplary embodiments, it will be seen that the antenna 214b and the wireless substrate 214a of the wireless communication means are separate, distinct components. However, it will of course be appreciated that the wireless substrate 214a and the wireless antenna 214b may alternatively be an integral component.

It will also be appreciated that components such as packings (not shown) may be used in one or more of the sub-components of the camera unit 1 to form a sealed structure.

Typically, the positioning accuracy of the panning and tilting movements can be improved by using an encoder; however, the description thereof is omitted in the present specification.

While the present invention has been described with reference to exemplary embodiments, it is to be understood that the invention is not limited to the disclosed exemplary embodiments.

## Claims

1. An image pickup apparatus (1) comprising:
a lens unit (110);
a tilt unit (10) to which the lens unit is fixed;
a base unit (30) configured to include an attaching portion;
a pan unit (20) comprising: a first tilt unit support portion (207a) configured to support a first side of the tilt unit; and a second tilt unit support portion (207b) configured to support a second side of the tilt unit, wherein the pan unit is pan-rotatable with respect to the base unit and supports the tilt unit in a tilt-rotatable manner; and
a wireless communication means (214) comprising a wireless antenna (214b) for wireless communication with an external device,
wherein the wireless antenna is disposed on the first tilt unit support portion or the second tilt unit support portion.

2. The image pickup apparatus according to Claim 1, further comprising:
a connection means configured to electrically connect the tilt unit and the pan unit to each other,
wherein the connection means is disposed in a vicinity of the first tilt unit support portion, and
wherein the wireless antenna is disposed in a vicinity of the second tilt unit support portion.

3. The image pickup apparatus according to Claim 1 or 2,
wherein in the second tilt unit support portion, at least a vicinity of the wireless antenna is formed of resin.

4. The image pickup apparatus according to any one of Claims 1 to 3,
wherein the pan unit includes a base portion to which the first tilt unit support portion and the second tilt unit support portion are fixed, and to which the base unit is attached,
wherein the tilt unit, the base unit, and the base portion are formed of metal, and
wherein the first tilt unit support portion and the second tilt unit support portion are formed of resin.

5. The image pickup apparatus according to any one of Claims 1 to 4, further comprising:
an illumination means (102),
wherein the illumination means is disposed inside the tilt unit.

6. The image pickup apparatus according to any one of Claims 1 to 5, further comprising:
an ultrasonic motor (40) configured to rotationally drive the tilt unit,
wherein the ultrasonic motor is disposed on the first tilt unit support portion.

7. The image pickup apparatus according to any one of Claims 1 to 6,
wherein the ultrasonic motor is ring shaped, and
wherein the connection means is disposed so as to pass inside the ultrasonic motor.

8. The image pickup apparatus according to any one of Claims 1 to 7,
wherein, in use, the external surfaces of the tilt unit and the pan unit are directly exposed to the external environment.
